# EUROPÄISCHE PATENTSCHRIFT

(11) **EP 1 373 993 B1**
(45) Veröffentlichungstag und Bekanntmachung des Hinweises auf die Patenterteilung: **11.10.2006**
(21) Anmeldenummer: 02737768.8
(22) Anmeldetag: 02.04.2002
(51) Int. Cl.: G05B 13/00

(54) **ROBOTERINTELLIGENZ IN NATÜRLICHEN UMGEBUNGEN**
ROBOT INTELLIGENCE IN NATURAL ENVIRONMENTS
INTELLIGENCE ROBOTIQUE EN ENVIRONNEMENT NATUREL

(30) Priorität: 05.04.2001 DE 10117016
(43) Veröffentlichungstag der Anmeldung: 02.01.2004
(73) Patentinhaber: SIEMENS AKTIENGESELLSCHAFT, 80333 München (DE)
(72) Erfinder: JÄGER, Markus, 80803 München (DE)
(86) Internationale Anmeldenummer: PCT/DE2002/001174
(87) Internationale Veröffentlichungsnummer: WO 2002/082195

(56) Entgegenhaltungen:
- Jager M., Nebel B.: "Decentralized Collision Avoidance, Deadlock Detection, and Deadlock Resolution for Multiple Mobile Robots." Proceedings of the 2001 IEEE/RSJ International Conference on Intelligent Robots and Systems. Maui, Hawaii, USA, OCT.29 - Nov. 03, 2001; ISBN 0-7803-6612-3 XP001105220
- O'DONNELL P A ET AL: "DEADLOCK-FREE AND COLLISION-FREE COORDINATION OF TWO ROBOT MANIPULATORS" PROCEEDINGS OF THE INTERNATIONAL CONFERENCE ON ROBOTICS AND AUTOMATION. SCOTTSDALE, MAY 15 - 19, 1989, WASHINGTON, IEEE COMP. SOC. PRESS, US, Bd. 1, 15. Mai 1989 (1989-05-15), Seiten 484-489, XP000041486 ISBN: 0-8186-1938-4 in der Anmeldung erwähnt
- Chandy K.M., Misra J.: "Distributed Deadlock Detection"; ACM Transaction on Computer Systems, Vol.1, No. 2, May 1983, Pages 144-156. XP001095416 in der Anmeldung erwähnt
- KANT K ET AL: "TOWARD EFFICIENT TRAJECTORY PLANNING: THE PATH-VELOCITY DECOMPOSITION" INTERNATIONAL JOURNAL OF ROBOTICS RESEARCH, SAGE SCIENCE PRESS, THOUSAND OAKS, US, Bd. 5, Nr. 3, 1986, Seiten 72-89, XP001099037 ISSN: 0278-3649 in der Anmeldung erwähnt

## Beschreibung

Die vorliegende Erfindung liegt auf dem Gebiet der Koordinierung der voneinander unabhängigen Bewegungsbahnen von Robotern in einer von diesen Robotern benutzten Arbeitsumgebung. Insbesondere betrifft sie ein Verfahren zur automatischen, dezentralisierten Koordinierung von voneinander unabhängigen, in Segmente zerlegbaren Bewegungsbahnen einer Mehrzahl innerhalb eines vorgegebenen räumlichen Bereichs miteinander kommunizierender mobiler Roboter, zur Vermeidung von Kollisionen, sowie zur Erfassung und Auflösung von gegenseitigen Blockierungen.

Wenn mehrere mobile Robote die gleiche Arbeitsumgebung teilen, muss eine mögliche Kollision der Roboter in Betracht gezogen werden. Die Gefahr einer Kollision nimmt dabei im allgemeinen mit der Anzahl der eingesetzten Roboter zu. Um Kollisionen zu vermeiden, müssen die Bewegungsbahnen der einzelnen Roboter koordiniert werden.

Verfahren zur Vermeidung von Kollisionen zwischen Robotern sind bekannt.

Ein Verfahren, bei dem auf ein Kommunikationsnetz zwischen den Robotern verzichtet werden kann, sieht beispielsweise die Einführung von Verkehrsregeln vor, die bei Beachtung durch alle Roboter Kollisionen verhindern. Nachteilig ist jedoch, dass bei diesem Verfahren sehr spezielle Annahmen über die Arbeitsumgebung getroffen werden müssen. Ein solches Verfahren ist beispielsweise in S. Kato, s. Nishiyama und J. Takeno "Coordinating Mobile Robots by Applying Traffic Rules", International Conference on Intelligent Robots and Systems (IRQS), pp. 1535-1541, 1992 beschrieben.

Bei einem anderen Verfahren, bei dem ebenfalls auf ein Kommunikationsnetz zwischen den Robotern verzichtet werden kann, werden die Roboter mit Sensoren ausgestattet, die andere Roboter innerhalb eines bestimmten Bereichs erfassen können. Immer wenn ein Roboter einen anderen Roboter erfasst, wird der mögliche Kollisionspunkt der Roboter berechnet und die Bewegungsbahn entsprechend abgeändert um die Kollision zu vermeiden. Da eine Neuplanung der Bewegungsbahnen jedoch auf einer lokalen Basis erfolgt kann dies zu gegenseitigen Blockierungen der Roboter (siehe unten) führen, die nicht erfasst und aufgelöst werden. Ein solches Verfahren ist zum Beispiel bei L. Chun, Z. Zhang und W. Chang, A Decentralized Approach to the Conflict-Free Motion Planning for Multiple Mobile Robots, "Int. Conf. on Robotics and Automation (ICRA), pp. 1544-1549, 1999 beschrieben.

Einen anderen Ansatz verfolgen Verfahren, bei denen eine Koordination der Bewegungsbahnen mittels einer zentralen Komponente erfolgt. Hierbei bieten sich grundsätzlich die zwei Möglichkeiten an, dass zum einen die zentrale Komponente kollisionsfreie Bewegungsbahnen gleichzeitig für alle beteiligten Roboter erstellt; zum anderen ist es möglich, dass voneinander unabhängig geplante Bewegungsbahnen der Roboter durch Verwendung der zentralen Komponente erst anschließend koordiniert werden. Die erste Methode ist beispielsweise in J. Barraquand, B. Langlois und J.-C. Latombe "Numerical Potential Field Techniques for Robot Path Planning, IEEE Trans. On System, Man and Cybernetics, Vol. 22(2), pp. 224-241, 1992 beschrieben. Ein Beispiel für die zweite Methode ist in S. Leroy, J.P. Laumond und T. Simeon "Multiple Path Coordinatin for Mobile Robots: A Geometric Algorithm", International Joint Conference on Artificial Intelligence (IJCAI), 1999, und M. Bennewitz und W. Burgard, "Coordinating the Motions of Multiple Mobile Robots Using a Probalistic Model", 8th International Symposium on Intelligent Robotic Systems (SIRS), 2000, zu finden.

Nachteilig bei allen Verfahren, die zur Koordinierung der Bewegungsbahnen eine zentrale Komponente einsetzen, ist jedoch, dass diese ein globales Kommunikationsnetz zwischen den Robotern benötigen. Überdies sind diese Verfahren rechnerisch aufwändig und unflexibel.

Eine leichtere und anpassungsfähigere Koordinierung zwischen den Robotern mit einem weniger aufwändigen Kommunikationsnetz könnte durch dezentralisierte Algorithmen erreicht werden, bei denen nur eine Kommunikation zwischen Paaren physikalisch naher Roboter stattfindet.

Aufgabe der vorliegenden Erfindung ist es deshalb, ein Verfahren zur dezentralisierten Koordinierung der Bewegungsbahnen einer Mehrzahl innerhalb eines vorgegebenen räumlichen Bereichs miteinander kommunizierender mobiler Roboter zur Vermeidung von Kollisionen, sowie zur Erfassung und Auflösung von gegenseitigen Blockierungen, anzugeben, mit dem die Nachteile der bekannten Verfahren vermieden werden können.

Diese Aufgabe wird durch die Merkmale des unabhängigen Anspruchs der vorliegenden Erfindung gelöst. Vorteilhafte Ausgestaltungen der Erfindung sind in den Unteransprüchen angegeben.

Erfindungsgemäß wird ein Verfahren zur automatischen, dezentralisierten Koordinierung von voneinander unabhängigen, in Segmente zerlegbaren Bewegungsbahnen einer Mehrzahl innerhalb eines vorgegebenen räumlichen Bereichs miteinander kommunizierender mobiler Roboter, zur Vermeidung von Kollisionen, sowie zur Erfassung und Auflösung von gegenseitigen Blockierungen, angegeben, welches dadurch gekennzeichnet ist, dass:
- ein Roboter Positionsinformationen von den anderen Robotern empfängt und seinen räumlichen Abstand (d_{rob}) zu den anderen Robotern bestimmt,
- ein Roboter bei Unterschreiten eines vorbestimmten Abstandes (d_{sicher}) zu den anderen Robotern jeweils eine Koordinierungsverbindung zu diesen Robotern zur Koordinierung seiner Bewegungsbahn mit den Bewegungsbahnen der anderen Roboter erstellt und aufrechterhält, solange der vorbestimmte Relativabstand unterschritten ist, wobei jeweils einer der durch eine Koordinierungsverbindung verbundenen Roboter als Koordinator und der andere als Partner gewählt wird,
- ein Koordinator die geplanten Bewegungsbahnsegmente seines Partners anfordert und einen Algorithmus zur Kollisionsvermeidung initiiert, durch den die Bewegungsbahnsegmente des Partners mit seinen eigenen Bewegungsbahnsegmenten abgeglichen werden, um die Kollisionsbereiche zu ermitteln, bei denen die Roboter einen vorbestimmten Mindestabstand (dₘᵢₙ) unterschreiten, und wobei ein zeitliches Abfolgeschema für die Bewegungsbahnsegmente von Koordinator und Partner ermittelt wird,
- ein Koordinator anhand des zeitlichen Abfolgeschemas für die Bewegungsbahnsegmente von Koordinator und Partner seinem Partner und sich Erlaubnis zur Ausführung des nächsten Bewegungsbahnsegments erteilt und eine Ausführung des Bewegungsbahnsegments nur erfolgt wenn Erlaubnis erteilt ist,
- ein Roboter zur Erfassung eines Kreises sich gegenseitig blockierender Roboter einen Algorithmus zur Blockierungserfassung initiiert, falls ihm die Erlaubnis zur Ausführung seines nächsten Bewegungsbahnsegmentes nicht erteilt wurde,
- bei Erfassung eines Kreises sich gegenseitig blockierender Roboter von dem erfassenden Roboter ein Algorithmus zur Blockierungslösung initiiert wird, welcher einen ersten Schritt und einen zweiten Schritt umfasst, wobei der erste Schritt darin besteht, dass bei einer Koordinierungsverbindung der sich gegenseitig blockierenden Roboter die Reihenfolge zur Ausführung des jeweils nächsten Bewegungsbahnsegments der durch eine Koordinierungsverbindung verbundenen Roboter getauscht wird, wobei der zweite Schritt darin besteht, dass einer oder mehrere der zu einem Kreis sich gegenseitig blockierender Roboter gehörenden Roboter ihre Bewegungsbahnen neu planen, wobei der zweite Schritt nur dann ausgeführt wird, wenn der erste Schritt zu keiner Blockierungslösung geführt hat.

Dies soll nun im einzelnen genauer erläutert werden. Bei dem erfindungsgemäßen Verfahren ist jeder Roboter fähig mit allen anderen Robotern zu kommunizieren und Informationen über den jeweiligen Ort auszutauschen, wenn sich die anderen Roboter innerhalb eines bestimmten vorbestimmten räumlichen Abstands von diesem aufhalten. Jeder Roboter bewertet die von den anderen Robotern empfangenen Ortsinformationen und bestimmt den räumlichen Abstand zwischen ihm und den anderen Robotern. (Eine etwaige Ungenauigkeit zwischen dem aus der vom anderen Roboter mitgeteilten Ortsinformation berechneten Abstand und dem tatsächlichen Abstand zwischen den beiden Robotern soll jedenfalls kleiner als δ_{d} sein.)

Wenn die Abstandsbestimmung eines Roboters ergibt, dass sein als d_{rob} bezeichneter Abstand zu einem anderen Roboter kleiner als ein als d_{sicher} bezeichneter vorbestimmter Mindestabstand ist, abzüglich der möglichen Ungenauigkeit δ_{d}, d_{rob} - δ_{d} < d_{si- cher}, dann initiiert dieser Roboter eine Koordinierungsverbindung zu diesem Roboter. Diese Koordinierungsverbindung wird solange aufrecht erhalten, wie der vorbestimmte Mindestabstand zwischen den beiden Robotern unterschritten ist. Jeder Roboter kann dabei gleichzeitig mehrere Koordinierungsverbindungen zu anderen Robotern initiieren und aufrechterhalten, falls der vorbestimmte Mindestabstand d_{sicher} zu diesen Robotern unterschritten ist.

Aufgabe einer Koordinierungsverbindung zwischen zwei Robotern ist es, die Bewegungen zweier Roboter entlang ihrer Bewegungsbahnen so zu koordinieren, dass Kollisionen zwischen ihnen vermieden werden. Praktischerweise wird dabei jede Bewegungsbahn eines Roboters in eine Abfolge von Segmenten zerlegt.

Zwischen zwei jeweils durch eine Koordinierungsverbindung verbundenen Robotern wird einer als Koordinator und der andere als Partner gewählt. Nachdem einer der Roboter als Koordinator bestimmt wurde, fordert dieser von seinem Partner die Segmente seiner Bewegungsbahn an und gleicht diese Bewegungsbahnsegmente mit seinen eigenen Bewegungsbahnsegmenten ab. Falls zeitlich-räumlich übereinstimmende Bewegungsbahnsegmente von Koordinator und Partner aufgefunden werden, werden diese Bewegungsbahnsegmente als kollidierend gewertet. Hieraus ermittelt der Koordinator ein zeitliches Abfolgeschema für die Bewegungsbahnsegmente der Bewegungsbahnen von Koordinator und Partner. Fortan erteilt der Koordinator sich und seinem Partner Erlaubnis das jeweils nächste Bewegungsbahnsegment der eigenen Bewegungsbahn durchzuführen. Ohne eine solche Erlaubnis darf das nächste Bewegungsbahnsegment einer Bewegungsbahn nicht ausgeführt werden. Dabei kann entweder nur dem Koordinator, oder nur dem Partner, oder beiden zugleich, Erlaubnis zum nächsten Bewegungsbahnsegment erteilt werden. Eine fehlende Erlaubnis für das nächste Bewegungsbahnsegment entspricht somit einer dem Roboter auferlegten Wartezeit.

Eine vorteilhafte Ausgestaltung der Erfindung sieht vor, dass das zeitliche Abfolgeschema für die Segmente der Bewegungsbahnen von Koordinator und Partner mittels eines Algorithmus ermittelt wird, der auf den Arbeiten von K. Kant und S. W. Zucker, "Toward Efficient Trajectory Planning: The Path-Velocity Decomposition", The Internation Journal of Robotics Resesearch, Vol. 5, pp. 72-89, 1989 und P. A. O'Donnell und T. Lozano-Periz, "Deadlock-Free und Collision-Free Coordination of Two Robot Manipulators; Int. Conf. on Robotics and Automation (ICRA), pp. 484-489, 1998 basiert, worauf in vollem Umfang Bezug genommen wird.

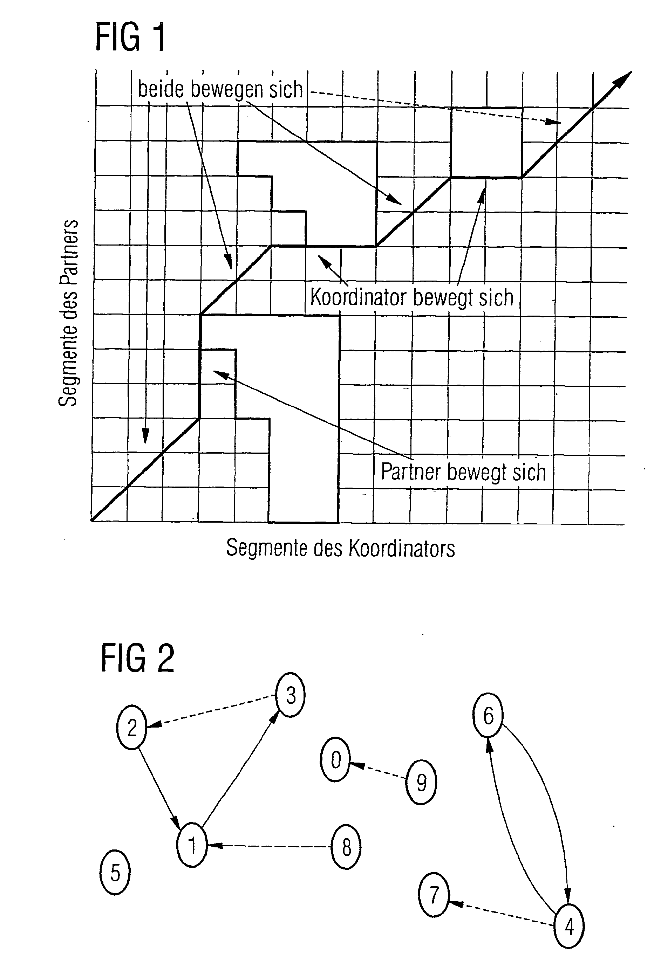

Hierbei werden die Bewegungsbahnsegmente eines Koordinators und seines zugehörigen Partners zunächst in einem zweidimensionalen Diagramm (Task Completion Diagramm) verfügbar gemacht, wobei die Bewegungsbahnsegmente des Koordinators und seines Partners jeweils von der horizontalen und vertikalen Achse des Diagramms repräsentiert werden. Ein solches Diagramm ist beispielhaft in der Fig. 1 gezeigt. Die Größen der Bewegungsbahnsegmente werden als konstant dargestellt, unabhängig von der tatsächlichen Ausführungszeit der Segmente. Der Anfangspunkt beider Bewegungsbahnen befindet sich in der linken unteren. Ecke des Diagramms, der Endpunkt der Bewegungsbahnen befindet sich in der rechten oberen Ecke.

Die kollidierenden Bereiche werden ermittelt, indem geprüft wird, ob ein bestimmtes Segment des Koordinators und ein bestimmtes Segment des Partners zu einer Kollision führen, d. h. ob es zwei Positionen der Roboter in den Segmenten gibt, die einen Abstand der Roboter ergeben, der kleiner als ein vorbestimmter Mindestabstand dₘᵢₙ ist. Eine solche Kollisionsprüfung muss für alle Kombinationen der Koordinator- und Partnersegmente erfolgen. Alle kollidierenden Bereiche, für welche die Kollisionsprüfung positiv ausgefallen ist, werden markiert. In Fig. 1 sind alle kollidierenden Bereiche schwarz unterlegt.

Nach Vervollständigung des Diagramms wird ein Ausführungsweg unter Vermeidung aller markierten, kollidierenden Bereiche, beginnend mit der linken unteren Ecke und endend in der oberen rechten Ecke ermittelt. Unter der zumeist gegebenen Vielzahl von möglichen Ausführungswegen wird vorzugsweise der kürzeste Ausführungsweg gewählt, da dieser Weg die geringste Gesamtverzögerung der Roboter verursacht. Bei der Ermittlung des Ausführungswegs sollten auch die unterschiedlichen Ausführungszeiten der Bewegungsbahnsegmente in Betracht gezogen werden.

Schließlich wird der Ausführungsweg verwendet um das Abfolgeschema zur Ausführung der Bewegungsbahnsegmente von Koordinator und Partner zu ermitteln. Ausgehend von der linken unteren Ecke wird der Weg in gerade Stücke zerlegt, wobei für jedes Stück ein Eintrag in das Abfolgeschema erfolgt. Für jedes horizontale Stück erfolgt ein Eintrag mit der Bedeutung, dass der Koordinator die Erlaubnis zur Bewegung erhält; für jedes vertikale Stück erfolgt ein Eintrag, dass der Partner die Erlaubnis zur Bewegung erhält; und für jedes schräge Stück erfolgt ein Eintrag, dass beide Roboter die Erlaubnis zur Bewegung erhalten. Wird nur einem Roboter die Erlaubnis zur Ausführung seines nächsten Bewegungsbahnsegmentes erteilt, so bedeutet dies, dass der andere Roboter warten muss, bis dieser sein Bewegungsbahnsegment ausgeführt hat. Dies entspricht dem Einfügen von Wartezeiten in die Bewegungsbahnsegmente des wartenden Roboters.

Kann kein Ausführungsweg ermittelt werden, d. h. es gibt keinen möglichen Ausführungsweg, so wird dem Abfolgeschema ein spezieller Eintrag hinzugefügt, der angibt, dass kein Roboter die Erlaubnis zur Ausführung des nächsten Segments erhält.

Jeder Roboter kann mit mehreren anderen Robotern, sowohl als Koordinator als auch als Partner durch Koordinierungsverbindungen verbunden sein. Hierdurch entsteht eine Koordinierung mehrerer Roboter in einer globalen Koordinationsstruktur. Jeder Roboter muss daher die Erlaubnis aller mit ihm verbundenen Koordinierungsverbindungen haben, bevor er sein nächstes Bewegungsbahnsegment ausführen darf. Dabei kann eine Situation eintreten, dass mehrere Roboter gegenseitig aufeinander warten müssen, bis sie ihr nächstes Bewegungsbahnsegment ausführen dürfen, so dass sich die Roboter gegenseitig in der Ausführung ihrer Bewegungsbahnsegmente blockieren. Solche Blockierungen (deadlocks) müssen aufgefunden und beseitigt werden, um die Roboter weiterhin einsetzen zu können.

Da eine gegenseitige Blockierung der Roboter nur eintreten kann, wenn ein Roboter darauf warten muss, bis ein anderer Roboter sein Bewegungsbahnsegment ausgeführt hat, wird dann wenn ein Roboter gezwungen ist auf einen anderen zu warten, von diesem eine Blockierungserfassung initiiert.

Die Koordinierungsverbindungen zwischen den Robotern können mit einer Richtung, graphisch durch einen Richtungspfeil symbolisiert, versehen werden, um anzuzeigen, dass ein Roboter auf einen anderen Roboter warten muss, bis dieser sein Bewegungssegment ausgeführt hat. Ein solche symbolische Darstellung ist in Fig. 2 gezeigt. Die Knoten der Darstellung entsprechen dabei den Robotern, die die Roboter verbindenden Pfeile symbolisieren die Koordinierungsverbindungen, wobei der Roboter, auf den die Pfeilspitze gerichtet ist, Vorrang bei der Ausführung seines Bewegungsbahnsegmentes gegenüber dem anderen Roboter, von dem der Pfeil ausgeht, hat. Beispielsweise muss Roboter 9 auf den Roboter 0 warten, bis dieser sein Bewegungsbahnsegment ausgeführt hat. Die Roboter 4 und 6 blockieren sich gegenseitig, weil beide aufeinander warten müssen, bis der andere sein Bewegungsbahnsegment ausgeführt hat. Ebenso blockieren sich die Roboter 1, 2 und 3 gegenseitig. Wie aus Fig. 2 ersichtlich ist, kann eine Erfassung von gegenseitigen Blockierungen darauf reduziert werden, längs der gerichteten Koordinierungsverbindungen geschlossene Kreise aufzufinden.

Vorzugsweise wird hierfür ein Algorithmus verwendet, der auf den Arbeiten von K. M. Chandy, J. Misra und L. M. Hass, "Distributed Deadlock Detection", ACM Trans. On Computer Systems, Mai 1983, basiert, worauf in vollem Umfang Bezug genommen wird. Hierbei wird bei Erstellen einer Richtung für eine Koordinierungsverbindung von dem Roboter, dem der Richtungspfeil entstammt, eine Prüfmeldung initiiert und längs der gerichteten Koordinierungsverbindung abgeschickt. Diese Prüfmeldung wird von allen Robotern, die diese empfangen, durch deren gerichteten Koordinierungsverbindungen weiter geleitet. Dabei wird eine Identifizierung jedes Roboters, den die Prüfmeldung passiert hat, in der Prüfmeldung vermerkt. Wenn schließlich ein Roboter eine Prüfmeldung empfängt, die von ihm selbst initiiert wurde, ist eine Blockierung erfasst. Anhand der vermerkten Identifizierungen der passierten Roboter kann die Blockierung sofort kenntlich gemacht werden.

Bei diesem Algorithmus kann es auftreten, dass mehr als ein Roboter die gleiche Blockierung auffinden, z. B. dann, wenn zwei Roboter eine Blockierungserfassung für den gleichen geschlossenen Kreis zur selben Zeit initiieren. Dies ist jedoch ohne Belang, da, die erfindungsgemäße Lösung solcher Blockierungen auch mehrfache Erfassungen der gleichen Blockierungen bewältigen kann. Gleichermaßen kann es vorkommen, dass scheinbare Blockierungen erfasst werden, d. h. Blockierungen, die bereits aufgelöst wurden. Dies kann beispielsweise auftreten, wenn eine gerichtete Koordinierungsverbindungen zu zwei verschiedenen Blockierungen gehört, und diese gerichtete Koordinierungsverbindung im Rahmen der Auflösung des anderen Kreises sich gegenseitig blockierender Roboter bereits verändert wurde. Der erfindungsgemäße Algorithmus zur Auflösung von Blockierungen kann jedoch auch solche scheinbaren Blockierungen handhaben.

Wird eine gegenseitige Blockierung von Robotern erfasst, wird von dem erfassenden Roboter eine Blockierungslösung initiiert.

Eine Auflösung einer gegenseitigen Blockierung von Robotern umfasst zwei Schritte, wobei der zweite Schritt nur ausgeführt wird, wenn der erste Schritt nicht zum Erfolg führt.

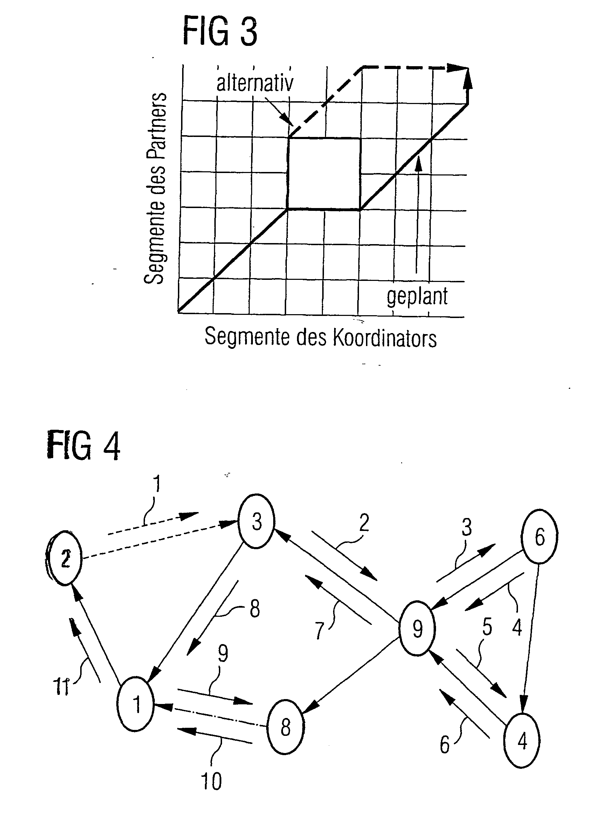

Der erste Schritt besteht darin, die Richtung einer gerichteten Koordinierungsverbindung im geschlossenen Kreis sich gegenseitig blockierender Roboter umzudrehen. Da hierdurch der Kreis nicht mehr geschlossen ist, ist die gegenseitige Blockierung aufgelöst. Wie bereits dargestellt wurde, wird durch die Richtung einer gerichteten Koordinierungsverbindung angegeben, welcher Roboter vorrangig sein nächstes Bewegungsbahnsegment ausführen darf. Es können jedoch Situationen eintreten, bei denen es nicht darauf ankommt, welcher der beiden Roboter vorrangig bewegt werden darf, sondern nur darauf, dass sich die beiden Roboter nicht gleichzeitig bewegen. Ein solcher Fall ist beispielsweise in Fig. 3 gezeigt. Bei dem in Fig. 3 schwarz unterlegten Kollisionsbereich kann zu dessen Umgehung zuerst der Koordinator und anschließend sein Partner bewegt werden (durchgezogene Linie). Alternativ hierzu kann aber auch zunächst der Partner und anschließend der Koordinator bewegt werden (gestrichelte Linie). Im gezeigten Beispiel ist überdies kein wesentlicher Unterschied in der Gesamtausführungszeit der beiden Roboter zu beobachten. In einem Task-Completion-Diagramm kann ein Kollisionsbereich, bei dem es nicht darauf ankommt, ob der Koordinator oder sein Partner zuerst bewegt werden, dadurch aufgefunden werden, dass der ermittelte Ausführungsweg einen Kollisionsbereich an dessen linken unteren Ecke trifft.

Um nun zu bestimmen, ob eine gerichtete Koordinierungsverbindung existiert, deren Richtungssinn umgekehrt werden kann, wird vorzugsweise von dem die Blockierung erfassenden Roboter eine Änderungsmeldung um den geschlossenen Kreis geschickt. Wenn ein Roboter eine Änderungsmeldung empfängt, fragt er den Koordinator seiner von ihm abgehenden gerichteten Koordinierungsverbindung, die zum Kreis gehört, ob der Richtungssinn der gerichteten Koordinierungsverbindung geändert werden kann. Falls der Koordinator in der Lage ist ein alternatives Abfolgeschema zur Ausführung der Bewegungsbahnsegmente zu erstellen, wobei es bei Umgehung eines Kollisionsbereiches nicht darauf ankommt, ob zuerst der Koordinator oder sein Partner bewegt wird, wird der Richtungssinn der gerichteten Koordinierungsverbindung umgedreht. Zudem wird die Änderungsmeldung verworfen. Die Auflösung der gegenseitigen Blockierung der Roboter ist damit erfolgreich und der Algorithmus zur Auflösung von Blockierungen ist beendet. Falls eine solche Umdrehung des Richtungssinns einer gerichteten Koordinierungsverbindung eines geschlossenen Kreises nicht erfolgen kann, wird der zweite Schritt des erfindungsgemäßen Algorithmus zur Auflösung von gegenseitigen Blockierungen von Robotern durchgeführt.

Der zweite Schritt zur Auflösung von Blockierungen besteht darin, dass einer oder mehrere Roboter einer Blockierung alternative Bewegungsbahnen planen. Dabei sollte vermieden werden, dass alle Roboter zugleich neu Bewegungsbahnen planen. Vielmehr sollte, wie bei dem hier gezeigte Algorithmus, versucht werden, dass eine möglichst geringe Anzahl von Robotern eine neue Bewegungsbahn plant.

Die Neuplanung von Bewegungsbahnen umfasst vorzugsweise zwei. Schritte, die iterativ durchgeführt werden, bis die Blockierung aufgelöst ist, oder bis entschieden wird, dass die Blockierung nicht aufgelöst werden kann, wenn nur einzelne Roboter zur Veränderung ihrer Bewegungsbahnen aufgefordert werden. Das letztere wird als sehr unwahrscheinlich für die tatsächliche Praxis angesehen, und hängt nur von den Eigenschaften der die Bewegungsbahn planenden Einheit und den Eigenschaften der Umgebung ab.

Der erste Schritt besteht darin, dass eine Neuplanmeldung um den geschlossenen Kreis aus blockierten Robotern geschickt wird, so wie es bei Aussendung der Änderungsmeldung erfolgt ist. Wenn ein Roboter eine Neuplanmeldung empfängt fragt er bei seiner Bewegungsbahn-Planungseinheit an, ob eine alternative Bewegungsbahn geplant werden kann. Der Roboter kann dabei seine Bewegungsbahn-Planungseinheit über die Positionen der umgebenden Roboter, d. h. die Roboter zu denen Koordinierungsverbindungen bestehen, informieren um bessere Resultate zu erzielen. Wenn ein Roboter in der Lage ist, eine alternative Bewegungsbahn zu planen, werden alle abgehenden, gerichteten Koordinierungsverbindungen entfernt. Da dies den geschlossenen Kreis unterbricht, wird dadurch die Blockierung aufgelöst. Die Neuplanmeldung wird anschließend verworfen. Wenn ein Roboter allerdings eine Neuplanmeldung empfängt, die von ihm selber initiiert wurde, kann daraus geschlossen werden, dass kein Roboter im Kreis imstande war, eine alternative Bewegungsbahn zu planen.

Wenn eine Blockierung während des ersten Schritts nicht aufgelöst werden konnte, dann kann dies daran liegen, dass dies vorübergehend nicht möglich ist. Dieser Fall kann beispielsweise eintreten, wenn andere Roboter in der Nachbarschaft eines Roboters diesen hindern, eine neue Bewegungsbahn zu erstellen. Diese beiden Fälle können durch das folgende Kriterium unterschieden werden:
Wenn keiner der beteiligten Roboter fähig ist, eine alternative Bewegungsbahn zu planen, und wenn keiner der beteiligten Roboter einen unbeteiligten Roboter in seiner Nachbarschaft hat, dann kann die Blockierung nicht aufgelöst werden, indem einzelne Roboter gefragt werden, alternative Bewegungsbahnen zu planen.

Ein Roboter wird dabei als beteiligt angesehen, wenn er Teil des Kreises ist, oder wenn er dem Kreis durch eine abgehende Koordinierungsverbindung entweder direkt oder transitiv angegliedert ist. In Fig. 4 ist beispielhaft ein blockierter Kreis der Roboter 1, 2 und 3, sowie eine Anzahl beteiligter Roboter dargestellt.

Idee des zweiten Schrittes zur Planung einer alternativen Bewegungsbahn ist es nun, dieses Kriterium zu prüfen und beteiligte Roboter, die nicht Teil des Kreises sind, zu fragen, ob sie alternative Bewegungsbahnen planen können. Dadurch können soviel blockierte Roboter als möglich befreit werden.

Während des zweiten Schritts zur Planung einer alternativen Bewegungsbahn wird vorzugsweise eine Befreiungsmeldung an alle beteiligten Roboter geschickt. Dies erfolgt, indem die Befreiungsmeldung einerseits um den Kreis geschickt wird, und andererseits, indem es der Befreiungsmeldung ermöglicht wird, den Kreis zu verlassen und die beteiligten Roboter unter Verwendung zugehender Koordinierungsverbindungen zu überqueren. Dabei werden solche Roboter, die die Befreiungsmeldung bereits erhalten haben, weg gelassen. In Fig. 4 ist der Weg, der durch den Roboter 2 initiierten Befreiungsmeldung veranschaulicht, wobei die gestrichelten Pfeile den Weg um den Kreis angeben und die schwarz unterlegten Pfeile den Weg während der Überquerung zeigen.

Die Befreiungsmeldung wird benutzt, um bei den Robotern, die nicht Teil des Kreises sind, anzufragen, ob alternative Bewegungsbahnen geplant werden können und um Informationen zu sammeln, ob sich nicht beteiligte Roboter noch in der Nachbarschaft befinden. Wenn ein Roboter eine Befreiungsmeldung empfängt, die er selbst initiiert hat, weiß er, dass alle beteiligten Roboter die Meldung empfangen haben. Der Roboter bewertet dann das oben dargestellte Kriterium und beendet die Blockierungslösung, wenn die Bedingungen hierfür erfüllt sind.

Falls der äußerst unwahrscheinliche Fall eintreten sollte, dass kein Richtungssinn einer gerichteten Koordinierungsverbindung umgedreht werden kann, und dass keiner der beteiligten Roboter seine Bewegungsbahn ändern kann, werden alle an einem Blockierungskreis beteiligten Roboter hierüber informiert. Diese Roboter nehmen dann an keinem Verfahren zum Erfassen und Lösen eines Blockierungskreises mehr teil.

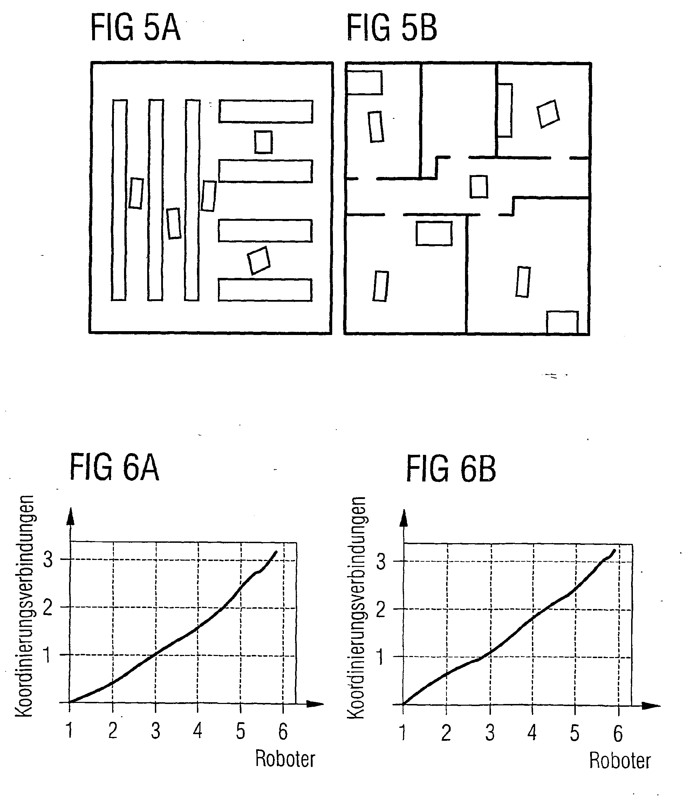

Nunmehr wird anhand der Figuren 5 bis 9, ein Ausführungsbeispiel des erfindungsgemäßen Verfahrens veranschaulicht.

Hierzu wurde das erfindungsgemäße Verfahren mit den vorzugsweise verwendeten Algorithmen implementiert und in der Simulation getestet. Als Testmodell wurden zwei verschiedene Umgebungen angenommen, nämlich ein Supermarkt mit nur einem Raum und eine Reihe von Regalen, sowie eine büroähnliche Umgebung, die aus einer Mehrzahl untereinander durch einen Korridor verbundener Räume mit einzelnen Hindernissen besteht. Dies ist in Fig. 5 dargestellt, wobei Fig. 5 a) den Supermarkt und Fig. 5 b) das Büro zeigt. Die Umgebungen hatten eine Größe von 10 x 15 m.

Die für die Simulation verwendeten Roboter hatten eine Größe von 1 m und eine Breite von 0,8 m und wurden mit einer Geschwindigkeit von 0,3 m/s bewegt. In Fig. 5 sind jeweils 5 Roboter in den verschiedenen Umgebungen dargestellt.

Für jede Umgebung wurden 6 Simulationsläufe mit jeweils 1 bis 6 Robotern durchgeführt. Jede der 12 Simulationsläufe lief für 10 min. Während der Simulationen folgten die Roboter zufällig geplanten Bewegungsbahnen. Zur Auswertung der Simulationsläufe wurden die mittlere Anzahl der Koordinierungsverbindungen für einen Roboter, die Anzahl der entstandenen Blockierungen und die mittlere Bewegungsbahnlänge der Roboter nach jedem Simulationslauf ermittelt.

In Fig. 6 ist die mittlere Anzahl der Koordinierungsverbindungen eines Roboters dargestellt, wobei Fig. 6 a) das Ergebnis für den Supermarkt und Fig. 6 b) das Ergebnis für das Büro zeigt. Wie aus Fig. 6 ersichtlich ist, steigt die mittlere Anzahl der Koordinierungsverbindungen fast linear mit der Anzahl der Roboter an. Der Grund hierfür liegt darin, dass die mittlere Anzahl der Koordinierungsverbindungen von der Zahl der Roboter in der Nähe eines Roboters abhängt, welche von der Zahl der eingesetzten Roboter linear abhängt.

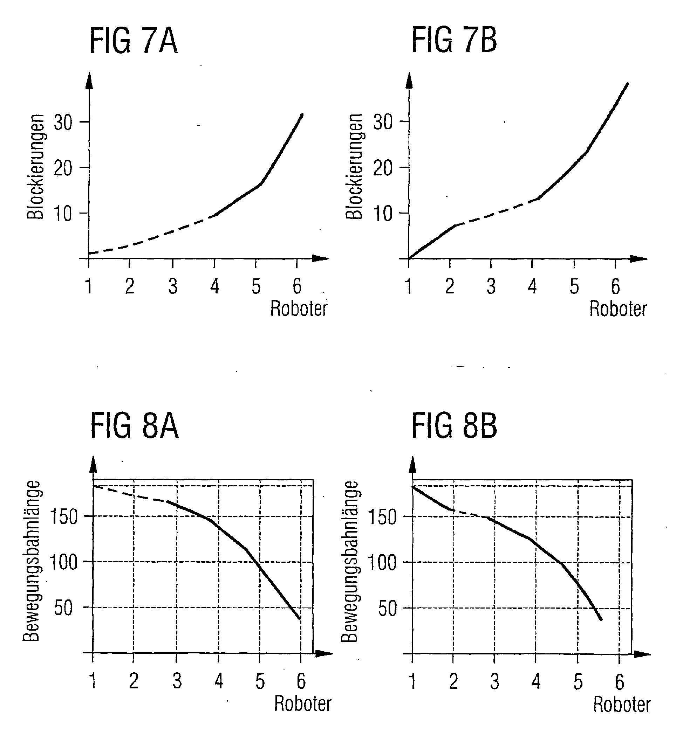

In Fig. 7 ist die Anzahl der gegenseitigen Blockierungen der Roboter dargestellt. Wiederum zeigt Fig. 7 a) dies für den Fall des Supermarkts und Fig. 7 b) für den Fall des Büros. Sie nimmt signifikant zu, wenn mehr als vier Roboter verwendet werden. Wie aus Fig. 7 ersichtlich ist, ist im Falle von zwei und drei Robotern die Menge an Kollisionen im Büro zweibis dreimal größer als im Supermarkt. Der Grund hierfür liegt darin, dass das Büro eine "heiße Stelle" aufweist, nämlich den die einzelnen Zimmer verbindenden Korridor. Dieser wird von den Robotern regelmäßig benutzt. Der Einfluss des Korridors gerät allerdings mit zunehmender Zahl an Robotern ins Hintertreffen, weil dadurch auch die Begegnungswahrscheinlichkeit in den einzelnen Zimmern ansteigt.

Fast alle Blockierungen mussten durch eine Neuplanung der Bewegungsbahnen aufgelöst werden; nur 3 % der Blockierungen konnten durch eine bloße Umkehrung des Richtungssinns einer gerichteten Koordinierungsverbindung aufgelöst werden.

In Fig. 8 ist schließlich die mittlere Bewegungsbahnlänge der Roboter dargestellt. Fig. 8 a) beschreibt wieder den Fall des Supermarkts und Fig. 8 b) den eines Büros. Da sich ein Roboter mit einer Geschwindigkeit von 0,3 m/s bewegt, und eine Simulation für 10 min läuft, kann sich ein Roboter im besten Fall 180 Meter weit bewegen. Die tatsächlichen Werte sind jedoch geringer, da die Roboter aufeinander warten müssen und in gegenseitige Blockierungen geraten, die aufgelöst werden müssen. Wie aus Fig. 8 ersichtlich ist, fällt die mittlere Bewegungsbahnlänge signifikant ab, wenn mehr als vier Roboter verwendet werden.

Aus dieser Simulation wird ersichtlich, dass das erfindungsgemäße Verfahren in der Lage ist, die Roboter zu koordinieren, wobei Kollisionen vermieden, Blockierungen erfasst und aufgelöst werden. Die Notwendigkeit zur Erfassung und Auflösung von Blockierungen nimmt mit der Anzahl der eingesetzten Roboter signifikant zu. Wenn bei der betrachteten Umgebung gegebener Größe mehr als vier Roboter eingesetzt werden, nimmt die Leistungsfähigkeit des Verfahrens deutlich ab, wie anhand der mittleren Bewegungsbahnlängen ersichtlich ist.

Zusammenfassend ist also festzustellen, dass mit dem erfindungsgemäßen Verfahren eine dezentralisierte Koordinierung der unabhängigen Bewegungsbahnen einer Mehrzahl mobiler Roboter zum Vermeiden von Kollisionen, und Erfassen und Lösen von Blockierungskreisen erfolgt.

Dies geschieht im wesentlichen durch eine Kombination von drei Algorithmen, welche die gestellte Aufgabe verlässlich lösen. Diese verwenden keine globale Synchronisierung, wechselwirken nicht miteinander und benötigen nur eine lokale Kommunikation zwischen den Robotern. Eine globale Koordinierung eines Satzes von Robotern wird erzielt, indem jedem Roboter mehr als eine Koordinierungsverbindung möglich ist. Dadurch wird ein Satz von Robotern zu einer globalen Struktur vernetzt.

Gegenseitige Blockierungen in der globalen Koordination, die nicht vermieden werden können, wenn nur eine lokale Koordination verwendet wird, werden zuverlässig erfasst. Die gegenseitigen Blockierungen werden gelöst, indem die Richtung von Koordinationsverbindungen umgekehrt und Roboter gefragt werden, ihre Bewegungsbahnen zu ändern. Die einzigen gegenseitigen Blockierungen, die nicht gelöst werden können, sind solche, bei denen die die Bewegungsbahnen planenden Einheiten der betroffenen Roboter nicht in der Lage sind alternative Bewegungsbahnen zu erstellen. Dies hängt jedoch nur von Fähigkeiten der die Bewegungsbahn planenden Einheit des Roboters und den Eigenschaften der Umgebung ab.

Die strenge Trennung zwischen der Planung von Bewegungsbahnen einerseits und der Kollisionsvermeidung/Handhabung von gegenseitigen Blockierungen andererseits, erlaubt es gänzlich unterschiedlich arbeitende die Bewegungsbahnen planende Einheiten zu verwenden. Die einzige Beschränkung liegt darin, dass diese in der Lage sein müssen, alternative Bewegungs- - bahnen zu planen.

Selbstverständlich ist die Erfindung nicht auf die Bewegung von mobilen Roboter beschränkt. Mobile Roboter im Sinne der Erfindung können auch mobile Teile von Robotern, beispielsweise Robotergreifarme sein.

Eine vorteilhafte Anwendung des erfindungsgemäßen Verfahrens liegt in der Koordinierung der unabhängigen Bewegungsbahnen eines Satzes von mobilen Robotern zur gemeinsamen Reinigung eines großen Raumes, z. B. ein großer Supermarkt, eine Lagerhalle oder ein Flughafen.

## Patentansprüche

1. Verfahren zur automatischen, dezentralisierten Koordinierung der unabhängigen, in Segmente zerlegbaren Bewegungsbahnen einer Mehrzahl innerhalb eines vorgegebenen räumlichen Bereichs miteinander kommunizierender mobiler Roboter, zur Vermeidung von Kollisionen, sowie zur Erfassung und Auflösung von gegenseitigen Blockierungen,
**dadurch gekennzeichnet, dass**
- ein Roboter Positionsinformationen von den anderen Robotern empfängt und seinen räumlichen Abstand (d_{rob}) zu den anderen Robotern bestimmt,
- ein Roboter bei Unterschreiten eines vorbestimmten Abstandes (d_{sicher}) zu den anderen Robotern jeweils eine Koordinierungsverbindung zu diesen Robotern zur Koordinierung seiner Bewegungsbahn mit den Bewegungsbahnen der anderen Roboter erstellt und aufrechterhält, solange der vorbestimmte Relativabstand unterschritten ist, wobei jeweils einer der durch eine Koordinierungsverbindung verbundenen Roboter als Koordinator und der andere als Partner gewählt wird,
- ein Koordinator die geplanten Bewegungsbahnsegmente seines Partners anfordert und einen Algorithmus zur Kollisionsvermeidung initiiert, durch den die Bewegungsbahnsegmente des Partners mit seinen eigenen Bewegungsbahnsegmenten abgeglichen werden, um die Kollisionsbereiche zu ermitteln, bei denen die Roboter einen vorbestimmten Mindestabstand (dₘᵢₙ) unterschreiten, und wobei ein zeitliches Abfolgeschema für die Bewegungsbahnsegmente von Koordinator und Partner ermittelt wird,
- ein Koordinator anhand des zeitlichen Abfolgeschemas für die Bewegungsbahnsegmente von Koordinator und Partner seinem Partner und sich Erlaubnis zur Ausführung des nächsten Bewegungsbahnsegments erteilt und eine Ausführung des Bewegungsbahnsegments nur erfolgt wenn Erlaubnis erteilt ist,
- ein Roboter zur Erfassung eines Kreises sich gegenseitig blockierender Roboter einen Algorithmus zur Blockierungserfassung initiiert, falls ihm die Erlaubnis zur Ausführung seines nächsten Bewegungsbahnsegmentes nicht erteilt wurde,
- bei Erfassung eines Kreises sich gegenseitig blockierender Roboter von dem erfassenden Roboter ein Algorithmus zur Blockierungslösung initiiert wird, welcher einen ersten Schritt und einen zweiten Schritt umfasst, wobei der erste Schritt darin besteht, dass bei einer Koordinierungsverbindung der sich gegenseitig blockierenden Roboter die Reihenfolge zur Ausführung des jeweils nächsten Bewegungsbahnsegments der durch eine Koordinierungsverbindung verbundenen Roboter getauscht wird, wobei der zweite Schritt darin besteht, dass einer oder mehrere der zu einem Kreis sich gegenseitig blockierenden Roboter ihre Bewegungsbahnen neu planen, wobei der zweite Schritt nur ausgeführt wird, wenn der erste Schritt zu keiner Blockierungslösung geführt hat.

2. Verfahren nach Anspruch 1, **dadurch gekennzeichnet, dass** bei dem Algorithmus zur Kollisionsvermeidung die Ermittlung des zeitlichen Abfolgeschemas für die geplanten Bewegungsbahnsegmente von Koordinator und Partner durch folgende Schritte erfolgt:
- Darstellung der Bewegungsbahnsegmente eines Koordinators und seines Partners durch die horizontale und vertikale Achse eines zweidimensionalen Diagramms (Task Completion Diagramm),
- Prüfung ob zwei Positionen der Roboter in den Bewegungsbahnsegmenten vorliegen, die einen Abstand der Roboter ergeben, der kleiner als ein vorbestimmter Mindestabstand dₘᵢₙ ist, wobei die Kollisionsbereiche markiert werden,
- ein Ausführungsweg unter Vermeidung aller markierten Kollisionsbereiche, beginnend mit der linken unteren Ecke und endend in der oberen rechten Ecke des Diagramms ermittelt wird,
- der Ausführungsweg beginnend mit der linken unteren Ecke des Diagramms in gerade Stücke zerlegt wird und für jedes gerade Stück ein Eintrag in ein zeitliches Abfolgeschema erfolgt, mit der Bedeutung dass für jedes horizontale Stück dem Koordinator, für jedes vertikale Stück dem Partner, und für jedes schräge Stück beiden Robotern Erlaubnis zur Ausführung des nächsten Bewegungsbahnsegmentes erteilt wird.

3. Verfahren nach Anspruch 2, **dadurch gekennzeichnet, dass** ein möglichst kurzer Ausführungsweg ermittelt wird.

4. Verfahren nach Anspruch 2 oder 3, **dadurch gekennzeichnet, dass** ein Ausführungsweg ermittelt wird, der Kollisionsbereiche möglichst häufig an deren untersten linken Ecke trifft.

5. Verfahren nach einem der vorhergehenden Ansprüche, **dadurch gekennzeichnet, dass** der Algorithmus zur Blockierungserfassung folgende Schritte aufweist:
- Definieren von gerichteten Koordinierungsverbindungen, in der Weise, dass der Ursprung einer gerichteten Koordinierungsverbindung dem wartenden Roboter und das Ziel der gleichen gerichteten Koordinierungsverbindung dem vorrangigen Roboter zugewiesen werden, .
- Aussenden einer Prüfmeldung längs der neu definierten gerichteten Koordinierungsverbindung,
- Empfangen der Prüfmeldung von dem zugehörigen Roboter und Weiterleitung der Prüfmeldung an alle von ihm abgehenden gerichteten Koordinierungsverbindungen unter Hinzufügung seiner Identifizierung,
- Empfangen der Prüfmeldung von den zugehörigen Robotern und jeweilige Überprüfung ob die Prüfmeldung von ihnen stammt, und
- Erkennen einer gegenseitigen Blockierung mit gleichzeitiger Identifizierung aller beteiligten Roboter, wenn die Prüfmeldung von einem Roboter stammt und/oder Weiterleitung der Prüfmeldung an alle abgehenden gerichteten Koordinierungsverbindungen unter Hinzufügung der Identifizierung, wenn die Prüfmeldung nicht von einem Roboter stammt.

6. Verfahren nach einem der vorhergehenden Ansprüche, **dadurch gekennzeichnet, dass** bei dem Algorithmus zur Blockierungslösung der erste Schritt die folgenden Teilschritte umfasst:
- Abschicken einer Änderungsmeldung an die sich gegenseitig blockierenden Roboter des Kreises,
- Empfangen der Änderungsmeldung durch die am Kreis der sich gegenseitig blockierenden Roboter beteiligten Roboter und Anfrage an die jeweiligen Koordinatoren ob die Reihenfolge der Ausführung des jeweils nächsten Bewegungsbahnsegments getauscht werden kann,
- Verwerfen der Änderungsmeldung, wenn eine Reihenfolge der Ausführung getauscht werden konnte, oder Empfangen der Änderungsmeldung von dem die Änderungsmeldung initiierenden Roboter und initiieren des zweiten Schritts,
wobei der zweite Schritt die folgenden Teilschritte umfasst:
- Abschicken einer Neuplanmeldung an die sich gegenseitig blockierenden Roboter des Kreises,
- Empfangen der Neuplanmeldung durch die am Kreis der sich gegenseitig blockierenden Roboter beteiligten Roboter und jeweilige Anfrage an die die Bewegungsbahn planende Einheit eine alternative Bewegungsbahn zu planen,
- Verwerfen der Neuplanmeldung und Entfernen aller gerichteten Koordinierungsverbindungen, wenn eine alternative Bewegungsbahn von einem Roboter geplant werden konnte, oder Empfangen der Neuplanmeldung von dem die Neuplanmeldung initiierenden Roboter und Initiieren einer Befreiungsmeldung,
- Abschicken der Befreiungsmeldung an alle am Kreis sich gegenseitig blockierenden Roboter beteiligten Roboter, wobei die Befreiungsmeldung den Kreis verlassen darf, um alle beteiligten Robotern zu veranlassen, dass diese eine alternative Bewegungsbahn planen, und zu vermerken ob sich ein nicht beteiligter Roboter in der Nachbarschaft befindet,
- Empfangen der Befreiungsmeldung durch den sie initiierenden Roboter und Prüfen ob keiner der beteiligten Roboter eine alternative Bewegungsbahn planen kann und ob keiner der beteiligten Roboter einen nichtbeteiligten Roboter in seiner Nachbarschaft hat und im Bejahensfalle Abbrechen der Blockierungslösung.

7. Verwendung des Verfahrens nach einem der vorhergehenden Ansprüche zur Koordinierung der unabhängigen Bewegungsbahnen eines Satzes von mobilen Robotern zur gemeinsamen Reinigung eines großen Raumes, insbesondere ein Supermarkt oder ein Flughafen.

## Claims

1. Method of automatic, decentralized coordination of the independent motion paths which can be broken down into segments of a plurality of mobile robots communicating with each other within a specified geographical area, to avoid collisions and to detect and resolve mutual blocking,
**characterized in that**
- a robot receives positioning information from the other robots and determines its distance (d_{rob}) to the other robots,
- When a robot moves to within a specified distance (d_{safe}) of the other robots it sets up an maintains a coordination connection to these robots to coordinate its motion path with the motion paths of the other robots for as long as is at less than the prespecified relative distance, in which case one of the robots linked by the coordination connection is selected as a coordinator and the other as partner,
- a coordinator requests the planned movement segments of its partner and initiates an algorithm for avoiding collisions by which the motion path segments of the partner are harmonized with its own motion path segments in order to determine the collision areas in which the robots are less that a specified minimum distance (dₘᵢₙ) apart and in which a timing sequence scheme for the motion path segments of coordinator and partner is determined,
- a coordinator gives permission to itself and its partner to execute the next motion path segment, on the basis of the timing sequence scheme for the motion path segments of coordinator and partner and the motion path segment is only executed when the permission is granted,
- a robot initiates an algorithm to detect blocking in order to detect a group of mutually blocking robots if it has not been granted permission to execute its next motion path segment,
- on detection a group of mutually blocking robots by the detecting robot an algorithm to resolve the blocking is initiated comprising a first step and a second step, with the first step being that with a coordinating connection of the mutually blocking robots the sequence for executing the next motion path segment is exchanged between the robots connected by a coordination connection in each case and with the second step being that one or more of the robots belonging to a group of mutually blocking robots plan new motion paths, with the second step only being executed if the first step has not led to the blocking being resolved.

2. Method according to claim 1, **characterized in that** the algorithm for collision avoidance determines the time sequence scheme for the planned motion path segments of coordinator and partner by the following steps:
- Presentation of the motion path segments of a coordinator and its partner by the horizontal and vertical axis of a tow-dimensional diagram (Task Completion Diagram),
- Checking whether there are two positions of the robots in the motion path segments which produce a distance for the robots which is less than a specified minimum distance dₘᵢₙ whereby the collision areas are marked,
- an execution path is established, avoiding all marked collision areas, beginning with the bottom left corner and ending in the top right corner of the diagram,
- the execution path is divided into equal sections, beginning with lower left corner of the diagram and an entry is made for each straight section in a time sequence scheme, meaning that for each horizontal section the coordinator, for each vertical section the partner, and for each diagonal section both robots are granted permission to execute the next motion path segment.

3. Method according to claim 2, **characterized in that** the shortest possible execution path is established.

4. Method according to claim 2 or 3, **characterized in that** an execution path is established which meets collision paths as frequently as possible at its lowest left corner.

5. Method in accordance with one of the previous claims, **characterized in that**, the algorithm for detecting blocking features the following steps:
- Definition of directed coordination connections in the way that the origin of a directed coordination connection is assigned to the waiting robot and the destination of the same directed coordination connection is assigned to the priority robot,
- Transmission of a test message along the newly defined directed coordination connection,
- Receipt of the test message from the corresponding robot and forwarding of the test message to all its outbound coordination connection with the addition of its identification,
- Receipt of the test message from the corresponding robots and relevant checking as to whether the test message originates from them, and
- Detection of a mutual blocking with simultaneous identification of all robots involved, if the test message originates from a robot and/or forwarding of test messages to all outbound coordination connections with the addition of the identification if the test message does not originate from a robot.

6. Method in accordance with one of the previous claims, **characterized in that** with the algorithm for resolving blocking the first step includes the following substeps:
- Sending of a change message to the mutually blocking robots of the group,
- Receipt of a change message by the robots involved in the group of mutually blocking robots and inquiry to the relevant coordinators as to whether the sequence of execution of the next motion path segment in each case can be swapped,
- Discarding of the change message if the sequence of execution can be swapped, or receipt of the change message by the robots initiating the change message and initiation of the second step,
whereby the second step comprises the following substeps:
- Sending of a replan message to the mutually blocking robots of the group,
- Receipt of the replan message by the robots involved in the group of mutually blocking robots and relevant request to the unit planning the motion path to plan an alternate motion path,
- Discarding the new plan message and removal of all directed coordination connections if an alternate motion path could be planned by a robot or receipt of the new plan message by the robot initiating the new plan message and initiation of a freeing message,
- Sending of the freeing message to all mutually blocking robots in the group, whereby the freeing message may leave the group to cause all robots involved to plan an alternate motion path and to note whether there is a non-participating robot in the neighbourhood,
- Receipt of a freeing message by the robots initiating it and checking that none of the robots involved can plan an alternate motion path and that none of the robots involved has a non-involved robot in its neighbourhood and if they can or do, cancelling the blocking resolution.

7. Use of the method in accordance with one of the previous claims to coordinate the independent motion paths of a set of mobile robots for joint cleaning of a large areas, in particular a supermarket or an airport.

## Revendications

1. Procédé pour la coordination décentralisée automatique des trajectoires de déplacement indépendantes les unes des autres, décomposables en segments, d'une pluralité de robots mobiles communiquant les uns avec les autres à l'intérieur d'une zone spatiale prédéfinie afin d'éviter des collisions, et pour la détection et la résolution de blocages mutuels,
**caractérisé en ce que**
- un robot reçoit des informations de position des autres robots et détermine sa distance dans l'espace (d_{rob}) par rapport aux autres robots,
- un robot, lorsqu'il passe en deçà d'une distance prédéterminée (d_{sicher}) par rapport aux autres robots, établit à chaque fois une liaison de coordination vers ces robots pour coordonner sa trajectoire de déplacement avec les trajectoires de déplacement des autres robots et maintient cette liaison aussi longtemps qu'il se trouve en deçà de la distance relative prédéterminée, un des robots reliés par la liaison de coordination étant, à chaque fois, choisi en tant que coordinateur et l'autre en tant que partenaire,
- un coordinateur demande les segments de trajectoire de déplacement planifiée de son partenaire et lance un algorithme d'évitement de collision grâce auquel les segments de trajectoire de déplacement du partenaire sont comparés à ses propres segments de trajectoire de déplacement pour déterminer les zones de collision dans lesquelles les robots passent en deça d'une distance minimum prédéterminée (dₘᵢₙ), un schéma séquentiel chronologique pour les segments de trajectoire de déplacement du coordinateur et du partenaire étant déterminé,
- un coordinateur délivre à son partenaire et à lui-même, sur la base du schéma séquentiel chronologique pour les segments de trajectoire de déplacement du coordinateur et du partenaire, une autorisation d'exécuter le segment de trajectoire de déplacement suivant et une exécution du segment de trajectoire de déplacement n'a lieu que si une autorisation est délivrée,
- un robot lance un algorithme de détection de blocage pour détecter un cercle de robots se bloquant mutuellement dans le cas où l'autorisation d'exécuter son segment de trajectoire de déplacement suivant ne lui a pas été délivrée,
- lors de la détection d'un cercle de robots se bloquant mutuellement, un algorithme de résolution de blocages est lancé par le robot ayant procédé à la détection, lequel algorithme comprend une première étape et une seconde étape, la première étape résidant dans le fait que, lors d'une liaison de coordination des robots se bloquant mutuellement, l'ordre d'exécution du segment de trajectoire de déplacement suivant respectif des robots liés par une liaison de coordination est changé, la seconde étape résidant dans le fait qu'un ou plusieurs des robots appartenant à un cercle de robots se bloquant mutuellement planifie/ent à nouveau ses/leurs trajectoires de déplacement, la seconde étape n'étant exécutée que si la première étape n'a pas abouti à une résolution du blocage.

2. Procédé selon la revendication 1, **caractérisé en ce que**, dans l'algorithme d'évitement de collision, la détermination du schéma séquentiel chronologique pour les segments de trajectoire de déplacement planifiés du coordinateur et du partenaire s'effectue grâce aux étapes suivantes consistant à :
- représenter des segments de trajectoire de déplacement d'un coordinateur et de son partenaire au moyen de l'axe horizontal et l'axe vertical d'un diagramme bidimensionnel (*Task Completion Diagram*),
- vérifier s'il existe, dans les segments de trajectoire de déplacement, deux positions des robots qui placent les robots à une distance inférieure à une distance minimum prédéterminée dₘᵢₙ, les zones de collision étant marquées,
- déterminer un chemin d'exécution commençant à l'angle inférieur gauche et se terminant dans l'angle supérieur droit du diagramme, en évitant toutes les zones de collision marquées,
- décomposer le chemin d'exécution commençant à l'angle inférieur gauche du diagramme en tronçons droits et, pour chaque tronçon droit, procéder à une entrée dans un schéma séquentiel chronologique, signifiant qu'une autorisation d'exécuter le segment de trajectoire de déplacement suivant est délivrée au coordinateur pour chaque tronçon horizontal, au partenaire pour chaque tronçon vertical et aux deux robots pour chaque tronçon oblique.

3. Procédé selon la revendication 2, **caractérisé en ce qu'**on détermine un chemin d'exécution aussi court que possible.

4. Procédé selon la revendication 2 ou 3, **caractérisé en ce qu'**on détermine un chemin d'exécution qui rencontre des zones de collision le plus souvent possible au niveau de leur angle inférieur gauche.

5. Procédé selon l'une des revendications précédentes, **caractérisé en ce que** l'algorithme de détermination de blocage comporte les étapes suivantes :
- définition de liaisons de coordination dirigées de manière à ce que l'origine d'une liaison de coordination dirigée soit assignée au robot qui attend et la destination de cette même liaison de coordination dirigée soit assignée au robot prioritaire,
- envoi d'un message de vérification le long de la liaison de coordination dirigée nouvellement définie,
- réception du message de vérification du robot associé et transmission du message de vérification à toutes les liaisons de coordination dirigées partant de lui en y ajoutant son identification,
- réception du message de vérification des robots associés et vérification respective pour savoir si le message de vérification provient d'eux et
- reconnaissance d'un blocage mutuel avec identification simultanée de tous les robots impliqués lorsque le message de vérification provient d'un robot et/ou transmission du message de vérification à toutes les liaisons de coordination dirigées partantes en y ajoutant l'identification lorsque le message de vérification ne provient pas d'un robot.

6. Procédé selon l'une des revendications précédentes, **caractérisé en ce que**, dans l'algorithme de résolution de blocages, la première étape comprend les sous-étapes suivantes :
- envoi d'un message de modification aux robots du cercle se bloquant mutuellement,
- réception du message de modification par les robots appartenant au cercle des robots se bloquant mutuellement et demande aux coordinateurs respectifs pour savoir si l'ordre d'exécution du segment de trajectoire de déplacement suivant respectif peut être changé,
- rejet du message de modification lorsqu'un ordre d'exécution a pu être changé ou réception du message de modification par le robot ayant initié le message de modification et lancement de la seconde étape,
la seconde étape comprenant les sous-étapes suivantes :
- envoi d'un message de nouvelle planification aux robot du cercle se bloquant mutuellement,
- réception du message de nouvelle planification par les robots appartenant au cercle des robots se bloquant mutuellement et demande respective à l'unité de planification de la trajectoire de déplacement pour planifier une trajectoire de déplacement alternative,
- rejet du message de nouvelle planification et élimination de toutes les liaisons de coordination dirigées lorsqu'une trajectoire de déplacement alternative a pu être planifiée par un robot ou réception du message de nouvelle planification par le robot ayant initié le message de nouvelle planification et lancement d'un message de libération,
- envoi du message de libération a tous les robots appartenant au cercle de robots se bloquant mutuellement, le message de libération ayant la possibilité de quitter le cercle pour inciter tous les robots impliqués à planifier une trajectoire de déplacement alternative et pour mentionner si un robot non impliqué se trouve dans le voisinage,
- réception du message de libération par le robot l'ayant initié et vérification pour savoir si aucun des robots impliqués ne peut planifier une trajectoire de déplacement alternative et si aucun des robots impliqués a un robot non impliqué dans son voisinage et, dans l'affirmative, interruption de la résolution de blocage.

7. Utilisation du procédé selon l'une des revendications précédentes pour coordonner les trajectoires de déplacement indépendantes d'un ensemble de robots mobiles pour le nettoyage commun d'un espace important, notamment un supermarché ou un aéroport.
